# NEUE EUROPÄISCHE PATENTSCHRIFT

(11) **EP 0 215 773 B2**
(45) Veröffentlichungstag und Bekanntmachung des Hinweises auf die Entscheidung über den Einspruch: **22.01.1997**
(45) Hinweis auf die Patenterteilung: 19.07.1989
(21) Anmeldenummer: 84901992.2
(22) Anmeldetag: 14.05.1984
(51) Int. Cl.: B23K 35/363

(54) **VERFAHREN ZUR HERSTELLUNG VON ELEKTRONISCHEN KOMPONENTEN UNTER VERWENDUNG EINES WEICHLÖTFLUSSMITTELS AUF CARBONSÄUREBASIS**
PROCESS FOR MANUFACTURING ELECTRONIC COMPONENTS USING SOFT SOLDERING FLUX BASED ON CARBOXYLIC ACIDS
PROCEDE DE FABRICATION DES COMPOSANTS ELECTRONIQUES AVEC UTILISATION D'UN FLUX DE SOUDURE TENDUE A BASE D'ACIDES CARBOXYLIQUES

(43) Veröffentlichungstag der Anmeldung: 01.04.1987
(73) Patentinhaber: KERNER, Rudolf A., D-86567 Hilgertshausen (DE)
(72) Erfinder: KERNER, Rudolf A., D-86567 Hilgertshausen (DE)
(74) Vertreter: Grünecker, Kinkeldey, Stockmair & Schwanhäusser Anwaltssozietät
(86) Internationale Anmeldenummer: EP8400143
(87) Internationale Veröffentlichungsnummer: WO8505307

(56) Entgegenhaltungen:
- WO-A-80/02663
- DE-A- 2 126 486
- FR-A- 2 391 023
- GB-A- 557 816
- GB-A- 1 458 351
- US-A- 2 740 193
- US-A- 4 165 244

## Beschreibung

Die Erfindung betrifft ein Verfahren zur Herstellung von mit Bauelementen bestückten gedruckten Schaltungen durch Weichlöten mittels Lötmaschinen unter Verwendung eines Weichlötflussmittels auf Carbonsäurebasis, das in der Elektronik- und Elektroindustrie eingesetzt wird.

Weichlötflussmittel auf der Basis von organischen Carbonsäuren sind bekannt. Sie werden grundlegend beschrieben von C.L. Barber, « Sort Solder Fluxes » in « Industrial Engineering Chemistry », Vol. 29, No. 10 (1937), in der DE PS 841 097, der DIN 8511. Typ F-SW 32 bzw. DIN 8516 und DIN 8527, sowie in der DE PS 2725 701 und der PE PS 292 1827. Ferner in den US PS 2740193 und US PS 41 65244 sowie GB PS 557816.

Weichlötflussmittel auf der Basis von organischen Carbonsäuren können in ihrem Aufbau allgemein wie folgt beschrieben werden: Sie bestehen aus einem Träger-, Aktivator- und Lösemittelsystem. Hierbei werden als Träger Harze oder mehrwertige modifizierte Alkohole oder deren Derivate, als Aktivatoren organische Säuren und als Lösemittel Alkanole, Ketone, Wasser etc. einzein oder in Mischungen verwendet.

Als Harze können im weichlöttechnischen Sinne definiert werden
a) natürliche Baumharze (Kolophonium)
b) Kunstharze auf der Basis von gesättigten und ungesättigten aliphatischen Mono-, Di-, Polisowie aromatischen Carbonsäuren bzw. Phenolen.

Die Produkte gemäss a) sind in ihrer Natur vorbeschrieben, z. B. in der DE PS 2820 656 bzw. DE PS 2921 827. Die bisher bekannten Aktivator- und Lösemittelsysteme sind in der eingangs angeführten Grundlagenliteratur umfassend vorbeschrieben.

Durch die Einführung von Bauelementen auf Basis der LSI- bzw. VLSI-Technologien kann eine mit Bauelementen bestückte gedruckte Schaltung nur mehr mittels Automatischen Testsystemen (ATE) wirtschaftlich auf Funktion geprüft werden. Es werden mit steigender Tendenz bereits bis zu mehrere tausend Prüfnadeln zur Kontaktierung mit Prüfadaptern pro gedruckte Schaltung benötigt. Bei Verwendung von herkömmlichen Harzflussmitteln, deren Rückstände nach dem Löten der gedruckten Schaltungen auf diesen verbleiben verursachen diese Harzflussmittelrückstände aufgrund ihrer klebrigen Konsistenz innerhalb weniger Prüfzyklen durch Bildung von Aufbauschichten auf den Prüfspitzen erhebliche Kontaktprobleme. Auch die Schichtdicke der Flussmittelrückstände an sich, die ja beim Aufsetzen der Prüfspitzen von diesen durchstossen werden muss, kann hierbei Anpresskräfte erfordern, bei denen sich die Prüfspitzen verbiegen. Sehr häufig ist auch, dass die Rückstandsschicht der Harzflussmittel überhaupt nicht durchdrungen wird. Alle diese Vorgänge führen zur Anzeige von scheinbaren Funktionsfehlern der Elektronik im Prüfprotokoll der ATE. Durch hohen Prüfaufwand zur Auffindung der Scheinfehlerquellen kann die Wirtschaftlichkeit der ATE in Frage gestellt sein.

Die vorbeschriebenen Scheinfehlerquellen lassen sich bekannterweise durch die Entfernung der Harzflussmittelrückstände auf den gedruckten Schaltungen in einem der Testroutine vorgeschalteten Reinigungsprozess vermeiden. Jedoch weisen bisher verfügbare Harzflussmittel in ihrer Geeignetheit zur Entfernungihrer Rückstände nach dem Lötprozess erhebliche Nachteile auf. Gewöhnlich werden als Reinigungsmedien Chlor-, Fluorchlorkohlenwasserstoffe (FKW). Alkanole atc. oder auch Mischungen davon verwendet Mit derartigen nonpolaren Reinigungsmedien lassen sich bisher zwar die Harzanteile der Flussmittelrückstände, aber nicht die Reaktionsprodukte der Aktivatorkomponenten entfernen. Es treten nach einem Reinigungsvorgang die bekannten « weissen Schleier » auf. Diese unerwünschten Rückstände können je nach Zusammensetzung des Harzflussmittels in den Reinigungsmedien unlösliche Reaktionsprodukte mit den feuerhemmenden Füllstoffen der gedruckten Schaltungen, Polimerisationsprodukte, kristalline Anhydride oder Ester der Aktivatorkomponenten sein. Insbesondere können derartige Reaktionsprodukte von aliphatischen ungesättigten und gesättigten Mono-, Di-, Policarbon- bzw. Ketosäuren, sowie von deren Amin-, Amid- bzw. Ureidkomponenten oder auch von Halogenverbindungen stammen.

Die DE- A-2921 827 deutet zwar die Eigenschaft der Entfernbarkeit der Flussmittelrückstände an. Dach zeigt sich in der Anwendung eine begrenzte Geeignetheit durch eine zeitliche Limitierung der Reinigbarkeit (max. 2 Stunden nach dem Lötprozess) bzw. der Einsatz ist nur bei Löttemperaturen > 300 °C möglich. Bei der in der Elektronikproduktion üblichen Löttemperatur von 250 °C besteht keine Entsprechung mit den Forderungen der DIN 8527. Es ist auch bekannt, dass bei Verwendung von aromatischen Säuren, bzw. aromatischen Verbindungen auf der Basis von Mono-, Di-, Policarbonsäuren und deren Derivaten ein einwandfreier Reinigungsprozess durchgeführt werden kann (PS DE 2725 701). Doch weisen derartige Verbindungen in Harzflussmitteln keine Stabilität gegen Autoxidation auf.

Ferner ist es für die Erfordernisse der Elektronikproduktion wünschenswert, die Möglichkeiten des wahlweisen Verbleibens der Flussmittelrückstände auf den gedruckten Schaltungen gemäss den Forderungen der DIN 8511, Typ F-SW 32 bzw. DIN 8527 zu haben. Aufgrund der heute üblichen Microminiaturisierung ist das Problem der Lotbrückenbildung besonders dominierend. Dies kann nur mit einer starken Reduzierung der Lotoberflächenspannung während des Weichlötvorgangs gelöst werden. Harzflussmittel auf der Basis von gesattigten und ungesättigten aliphatischen Mono-, Di- und Policarbonsäuren besitzen zwar die Aktivität wie sie die heutige Elektronikproduktion fordert Sie weisen jedoch die vorbeschriebenen Reinigungsprobleme auf. Flussmittel auf der Basis von aromatischen Cabonsäuren haben nur eine geringe Aktivität und weisen Instabilität gegen Autoxidation als gravierende Nachteile auf (insbesondere ist ein Absinken des Oberflächenwiderstands feststellbar).

Die in der PS GB-A-1448 351 erwähnte Flussmittelzusammensetzung wird für das Verfahren Löten von Blechdosen auf body-maker-Maschinen angewandt Über die speziellen Anforderungen, die an Flussmittel zur Herstellung von elektronschen Produkten (z. B. gedruckten Schaltungen) gestellt werden (wie z. B. Oberflächenwiderstand) wird in dieser PS nichts ausgesagt

Die DE-OS-2126486 offenbart ein Flußmittel zum Weichlöten, das als Aktivator eine oder mehrere Säuren oder Säureanhydride umfaßt. Als Säure wird Phthalsäure und als Säureanhydride werden Glutarsäureanhydrid, Bernsteinsäureanhydrid und Cyclohexan-1,2-Dicarbonsäureanhydrid genannt.

Die Erfindung ist in den Ansprüchen wiedergegeben. Hierbei ist die besondere Eigenschaft der vollständigen Wiederentfernbarkeit der Flussmittelrückstände nach dem Weichlötprozess mit jedem bekannten und geeigneten Reinigungsverfahren (z B. Sprüh-. Bürsten-, Ultraschall- oder Dampfentfettungsreinigung) and Reinigungsmedium (z. B. Chlor-, Fluorchlorkohlenwasserstoffen, Alkoholen, Ketonen, Wasser) ohne zeitliche Begrenzung und ohne Hinterlassung irgendwelcher Rückstände möglich. Die erfindungsgemässen Flussmittel sind stabil und unterliegen keinerlei Autoxidation oder sonstigen Abbauprozessen. Andererseits weisen die alicyclischen Carbonsäuren (ähnlich den aromatischen) erheblich niedrigere pKa- Werte als die aliphatischen Carbonsäuren auf. Dies drückt sich in einer gegenüber mit rein aliphatischen Carbonsäuren aktivierten Flussmitteln deutlich verbesserten Lötfähigkeit der erfindungsgemässen Flussmittel aus. Zudem können die Flussmittelrückstände nach dem Lötprozess wahlweise auf den gedruckten Schaltungen verbleiben.

Mit der Erfindung können Flussmittel für verschiedene Applikationsverfahren aufgebaut werden. Alle nachfolgenden Prozentangaben beziehen sich (soweit nicht anders angegeben) als Gewichtsprozente auf die Gesamtzusammensetzung.

### a) Flüssigflussmittel

Die Anwendung erfolgt vorzugsweise bei automatischen Fliesslötverfahren, wobei die Applikation auf die gedruckten Schaltungen mittels Schaum, Sprayen oder ähnlichem geschieht.

Hierbei ist das Harz in einer Menge von 0,01-35 % enthalten. Die geigneten Harzsorten sind eingangs vorbeschrieben.

Die mehrwertigen, modifizierten Alkohole mit 2-16 C-Atomen deren Isomeren und Derivate. insbesondere deren Ester-, Ether-und Oxoverbindungen sind mit 0,01-90 % enthalten. Als Beispiele sind angeführt Glycole, Glycerin, Pentaerythrit Dodecanol, Tridecanol und Tetradecanol, auch in Verbindung mit Ethylen- und Propylenoxidpolimerisationsaddukten.

Als alicyclische Mono-, Di- bzw. Policarbonsäuren mit mindestens einem Kohlenstoffring sind alicyclische Ringsysteme auf der Basis von Cyclopentan, -hexan und -heptan geeignet Hiervon hat sich als besonders geeignet die Cyclohexan-Reihe gezeigt Dies drückt sich auch darin aus, dass die Spannungsenergie zur Deformation der Kohlenstoffringe beim Cyclohexan ein Minimum hat Als bevorzugt geeignet haben sich alicyclische Carbonsäuren gezeigt die sich nicht in optisch aktive Antipoden spalten lassen Beispiel für eine geeignete alicyclische Carbonsäure ist die trans-Cyclo-hexan- 1 ,4-Dicarbonsäure.

Gesättigte aliphatische Monocarbonsäuren mit 12-22 C-Atomen: Beispiele für geeignete Saüren sind Palmitin-, Stearin- und Laurinsäure, wobei die Stearinsäure besonders bevorzugt ist.

Gesättigte aliphatische Dicarbonsäuren mit 2-10 C-Atomen und Policarbonsäuren: Beispiele für geeignete Säuren sind Malon-, Bernstein-, Glutar-, Adipin-, Pimelin-, Kork-, Azelain- und Sebazinsäure, wobei die Bernstein-, Adipin- und Glutarsäure oder Mischungen besonders bevorzugt sind.

Aliphatische Ketocarbonsäuren mit 3-5 C-Atomen: Beispiele für geeignete Säuren sind Brenztrauben-, Acetessig- und Lävulinsäure, wobei die Lävulinsäure besonders bevorzugt ist.

Quartäre Ammoniumsalze mit 4-19 C-Atomen: Beispiel für ein geeignetes Salz ist das Tetramethyammoniumsalz. Bevorzugt geeignet sind die Halogensalze, insbesondere sind die Bromide der quartären Ammoniumsalze bevorzugt.

Das Wasser ist mit 0,01-25 % enthalten. Die mit Wasser mischbaren Alkanole oder deren Isomeren mit 2-5 C-Atomen sind als Rest zu jeweils 100 % der jeweiligen Flussmittelmischung enthalten. Beispiele für geeignete Alkanole sind Äthanol, Propanol. Butanol, Pentanol oder deren Isomere, wobei Isopropanol besonders bevorzugt ist.

Mit der Dispergierung von feinteiligern Lot in das Flüssigflussmittel kann auch eine Lotpaste erhalten werden.

### b) Festflussmittel

Ein derartiges Produkt kann zur Umhüllung von Lotformteilen oder als Füllung von Lotdrähten verwendet werden. Für diese Anwendungen entfallen die Komponenten gemäss Anspruch 3.

Das nachfolgende Beispiel erläutert die Erfindung.

### Beispiel

Flüssigflussmittel für automatisches Fließlötverfahren

| | |
|---|---|
| WW Gum Rosin | 12,2 |
| Isopropanol | 77,0 |
| Wasser | 7,0 |
| Cyclohexan-Dicarbonsäure | 1,6 |
| Bernsteinsäure | 1,4 |
| Stearinsäure | 1,0 |
| Lävulinsäure | 0,3 |

Die Flussmittelmischung entspricht in Bezug auf Korrosion und Oberflächenwiderstand gemäss DIN 8516 und DIN 8527 allen Tests für halogenfreie Flussmittel.

## Patentansprüche

1. Verfahren zur Herstellung von mit Bauelementen bestückten gedruckten Schaltungen durch Weichlöten mittels Lötmaschinen unter Verwendung eines Weichlötflußmittels auf der Basis von organischen Carbonsäuren, **dadurch gekennzeichnet**, daß das Weichlötflußmittel aus einem Aktivator-, Träger- und Lösemittelsystem besteht, wobei das Aktivatorsystem aus, jeweils bezogen auf die Gesamtzusammensetzung,
a) 0,01 bis 20 Gew.-% mindestens einer alicyclischen Mono-, Di- oder Polycarbonsäure mit mindestens einem Kohlenstoffring,
b) 0,01 bis 25 Gew.-% mindestens einer gesättigten aliphatischen Monocarbonsäure mit 12 bis 22 C-Atomen,
c) 0,01 bis 10 Gew.-% mindestens einer gesättigten aliphatischen Dicarbonsäure mit 2 bis 10 C-Atomen,
d) 0,01 bis 10 Gew.-% mindestens einer aliphatischen Ketocarbonsäure mit 3 bis 5 C-Atomen,
e) 0,01 bis 5 Gew.-% mindestens eines quartären Ammoniumsalzes mit 4 bis 19 C-Atomen, besteht,
wobei die Menge von e) auch 0 sein kann.

2. Verfahren nach Anspruch 1, **dadurch gekennzeichnet**, daß in Gewichtsprozent, bezogen auf die Gesamtzusammensetzung, das Trägersystem entweder aus
a) 0,01 bis 35 % eines natürlichen Baumharzes oder eines Kunstharzes oder Mischungen hiervon und/oder aus
b) 0,01 bis 90 % mehrwertiger modifizierter Alkohole mit 2 bis 16 C-Atomen und/oder deren Derivaten besteht.

3. Verfahren nach Anspruch 1, **dadurch gekennzeichnet**, daß in Gewichtsprozent, bezogen auf die Gesamtzusammensetzung, das Lösemittelsystem aus
a) 0,01 bis 25 % Wasser und/oder
b) mindestens einem mit Wasser mischbaren Alkanol mit 2 bis 5 C-Atomen oder deren Isomeren, das als Rest zu jeweils 100 % verwendet wird, besteht.

4. Verfahren nach Anspruch 1, **dadurch gekennzeichnet**, daß das Weichlötflußmittel einen zusätzlichen Gehalt an feinteiligem Lot aufweist.

5. Verfahren nach Anspruch 1, **dadurch gekennzeichnet**, daß das Weichlötflußmittel zur Umhüllung von Lotformteilen oder als Füllung von Lotdrähten verwendet wird.

## Claims

1. A process for the production of printed circuits
equipped with component parts, by soft soldering by means of soldering machines using a soft soldering flux based on organic carboxylic acids, characterised in that the soft soldering flux consists of an activator system, support system and solvent system, wherein the activator system consists of
a) from 0.01 to 20 wt.% of at least one alicyclic mono-, di- or polycarboxylic acid having at least one carbon ring,
b) from 0.01 to 25 wt.% of at least one saturated aliphatic monocarboxylic acid having 12 to 22 C atoms,
c) from 0.01 to 10 wt.% of at least one saturated aliphatic dicarboxylic acid having 2 to 10 C atoms,
d) from 0.01 to 10 wt.% of at least one aliphatic ketocarboxylic acid having 3 to 5 C atoms,
e) from 0.01 to 5 wt.% of at least one quaternary ammonium salt having 4 to 19 C atoms,
in each case referred to the total composition, and wherein the quantity of e) may also be 0.

2. The process according to claim 1, characterised in that in per cent by weight, referred to the total composition, the support system consists either of
a) from 0.01 to 35% of a natural resin or of a synthetic resin or of mixtures thereof and/or of
b) from 0.01 to 90 % of polyhydric modified alcohols having 2 to 16 C atoms and/or of derivatives thereof.

3. The process according to claim 1, characterised in that in per cent by weight, referred to the total composition, the solvent system consists of
a) from 0.01 to 25% of water and/or
b) at least one alkanol which is miscible with water and has 2 to 5 C atoms, or isomers thereof, which is used as the remainder, in each case bringing the total to 100%.

4. The process according to claim 1, characterised in that the soft soldering flux additionally contains finely-divided solder.

5. The process according to claim 1, characterised in that the soft soldering flux is used for covering preformed pieces of solder or as a filling for soldering wires.

## Revendications

1. Procédé de fabrication de circuits imprimés garnis de composants par brasage tendre au moyen de machines de brasage en utilisant un fondant de brasage tendre à base d'acides carboxyliques organiques, caractérisé en ce que le fondant de brasage tendre est constitué par un système d'activateur, un système de support et un système de solvant, le système d'activateur étant constitué par, chaque fois en se rapportant à la composition totale,
a) de 0,01 à 20% en poids d'au moins un acide mono, di- ou polycarboxylique alicyclique contenant au moins un noyau carboné,
b) de 0,01 à 25% en poids d'au moins un acide monocarboxylique aliphatique saturé contenant de 12 à 22 atomes de carbone,
c) de 0,01 à 10% en poids d'au moins un acide dicarboxylique aliphatique saturé contenant de 2 à 10 atomes de carbone,
d) de 0,01 à 10% en poids d'au moins un acide cétocarboxylique aliphatique contenant de 3 à 5 atomes de carbone,
e) de 0,01 à 5% en poids d'au moins un sel d'ammonium quaternaire contenant de 4 à 19 atomes de carbone,
la quantité de e) pouvant également être égale à 0.

2. Procédé selon la revendication 1, caractérisé en ce que, en pour cent en poids rapporté à la composition totale, le système de support est constitué par
a) de 0,01 à 35% d'une résine naturelle ou d'une résine synthétique ou encore de mélanges de ces dernières, et/ou par
b) de 0,01 à 90% d'alcools modifiés polyvalents contenant de 2 à 16 atomes de carbone et/ou de leurs dérivés.

3. Procédé selon la revendication 1, caractérisé en ce que, en pour cent en poids rapporté à la composition totale, le système de solvant est constitué par
a) de 0,01 à 25% d'eau et/ou par
b) au moins un alcanol miscible à l'eau contenant de 2 à 5 atomes de carbone ou ses isomères, que l'on utilise comme reste pour obtenir respectivement 100%.

4. Procédé selon la revendication 1, caractérisé en ce que le fondant de brasage tendre présente une teneur supplémentaire en métal d'apport de brasage tendre finement divisée.

5. Procédé selon la revendication 1, caractérisé en ce que le fondant de brasage tendre est utilisé pour envelopper des préformés de brasage ou bien comme remplissage de fils d'apport à noyaux.
